Europäisches Patentamt

European Patent Office

Office européen des brevets

(19)

(11) Numéro de publication: **0 273 078**
**A1**

(12)

# DEMANDE DE BREVET EUROPEEN

(21) Numéro de dépôt: 86402952.5

(22) Date de dépôt: 29.12.86

(51) Int. Cl.⁴: **F16B 23/00**

(43) Date de publication de la demande:
06.07.88 Bulletin 88/27

(84) Etats contractants désignés:
**BE DE ES GB IT NL SE**

(71) Demandeur: **Etablissements SAINT-CHAMOND-GRANAT**
**12, rue d'Epluches**
**F-95310 Saint Ouen l'Aumone(FR)**

(72) Inventeur: **Fauchet, Christian Roger**
**5, rue des Fonds de Cuves**
**F-95240 Cormeilles en Parisis(FR)**

(74) Mandataire: **Chameroy, Claude et al**
**c/o Cabinet Malemont 42, avenue du**
**Président Wilson**
**F-75116 Paris(FR)**

(54) Vis à empreinte d'extrémité.

(57) Vis à empreinte d'extrémité, caractérisée en ce que ladite empreinte (30) est de forme multilobée avec un nombre impair de lobes.

EP 0 273 078 A1

## Vis à empreinte d'extrémité

La présente invention concerne une vis à empreinte d'extrémité c'est-à-dire une vis susceptible d'être maintenue en rotation par l'extrémité destinée à recevoir l'écrou.

La réduction des coûts dans l'industrie, et en particulier dans l'industrie aéronautique, a amené l'utilisation de fixations filetées de type vis-écrou, présentant la particularité d'être accessibles par une seule face de l'assemblage, donc par un seul opérateur. A l'aide d'un outillage approprié, celui-ci peut visser l'écrou pendant qu'un embout vient bloquer la vis en rotation au moyen d'une empreint réalisée à son extrémité, c'est-à-dire côté filetage. Généralement, cette empreinte est de forme hexagonale creuse.

Dans le cas de matériaux difficiles à déformer plastiquement, cette empreinte est obtenue par perçage puis brochage, postérieurement à l'exécution du filetage, lorsque celui-ci est obtenu par laminage, comme exigé en aéronautique et d'une manière générale, dans tout domaine où des performances mécaniques élevées sont requises. En effet, dans de tels matériaux, le roulage d'un filetage par dessus une forme intérieure de type hexagonal creux, provoque le plus souvent une fissuration du métal due au fait que les outils de laminage qui sollicitent deux génératrices diamétralement opposées de la vis, rencontrent une section résistante variable de la pièce selon que la forme hexagonale creuse se présente alternativement sur angles et sur plats dans la ligne d'action des outils. Des fissures se développent ainsi à partir des angles de l'hexagone.

On connaît également des empreintes multilobées à six lobes, qui permettent de transmettre des couples plus importants, mais qui présentent exactement les mêmes problèmes que les empreintes hexagonales creuses en ce qui concerne le phénomène de fissuration.

Enfin, la réalisation d'une empreinte, quelle qu'en soit la forme, par perçage puis brochage, induit des angles vifs rentrants avec coupure des fibres du métal, qui sont autant de points d'initiation de fissures sous l'action des efforts mécaniques en service.

La présente invention a donc pour but principal de remédier à ces inconvénients et, pour ce faire, elle a pour objet une vis à empreinte d'extrémité qui se caractérise essentiellement en ce que ladite empreinte est de forme multilobée avec un nombre impair de lobes.

Dans une forme de réalisation particulière de l'invention, l'empreinte multilobée comporte sept lobes.

Grâce à cette disposition, il est possible, ainsi qu'on le verra plus clairement par la suite, d'exécuter sans fissuration un filetage par laminage, postérieurement à l'obtention de l'empreinte. Cette empreinte pourra donc avantageusement être obtenue par déformation plastique du métal, en même temps que le forgeage de la pièce brute, ce qui représente un gain de temps et donc un moindre coût. De plus, comme la déformation plastique du métal induit un fibrage qui renforce la résistance mécanique de la vis, il est possible de réduire la longueur de la partie filetée, ce qui permet un gain de matière et surtout un gain de poids appréciable, particulièrement utile dans l'industrie aéronautique.

Une form d'exécution de l'invention est décrite ci-après à titre d'exemple, en référence au dessin annexé dans lequel :

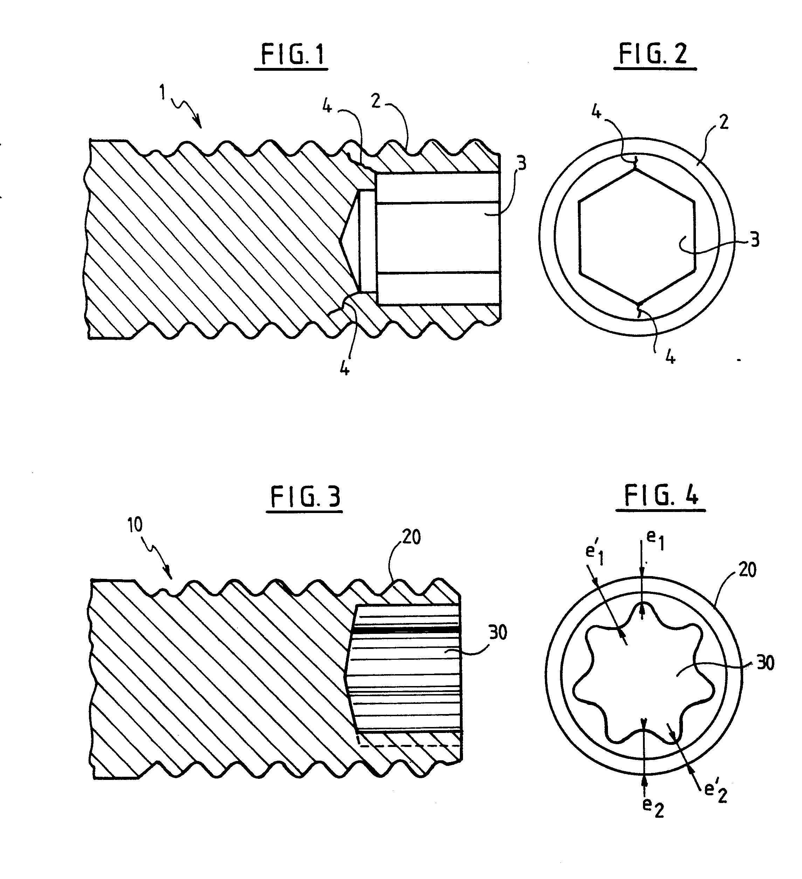

. la figure 1 est une vue en coupe axiale d'une vis de type connu, comportant une empreinte d'extrémité de forme hexagonale ;

. la figure 2 est une vue en bout de cette vis ;

. la figure 3 est une vue en coupe axiale d'une vis conforme à l'invention, comportant une empreinte d'extrémité multilobée à sept lobes ; et

. la figure 4 est une vue en bout de cette vis.

La vis 1 représentée sur les figures 1 et 2 est pourvue d'un filetage 2 et comporte à son extrémité, c'est-à-dire du côté du filetage, une empreinte creuse 3 qui est ici de forme hexagonale. Cette vis de type connu permet à un seul opérateur, grâce à un outillage approprié, de visser un écrou sur le filetage 2 pendant qu'un embout vient en prise dans l'empreinte 3 afin de bloquer la vis en rotation.

Toutefois, dans le cas de matériaux difficiles à déformer plastiquement, l'empreinte 3 doit obligatoirement être réalisée par perçage puis brochage, comme représenté sur la figure, postérieurement à l'exécution du filetage 2. En effet, le roulage d'un filetage par dessus l'empreinte provoque le plus souvent des fissures dans le métal, comme illustré en 4, du fait que les outils de laminage rencontrent une section résistante variable.

La vis 10 représentée sur les figures 3 et 4 permet de remédier à cet inconvénient, grâce au fait qu'elle comporte une empreinte 30 de forme multilobée à nombre impair de lobes, par exemple sept. Ainsi, au cours de la rotation provoquée par l'opération de laminage du filetage 20, la vis munie de cette empreinte multilobée présente dans la ligne d'action des outils une section résistante pratiquement constante telle que $e_1 + e_2 = e'_1 + e'_2 \simeq$ Cte.

Par voie de conséquence, l'effort résistant à l'action des molettes se trouve régularisé et permet une déformation plastique homogène du filetage sans fissuration.

L'empreinte multilobée 30 peut donc être réalisée par déformation plastique du métal, en même temps que l'opération de forgeage de l'ébauche, ce qui représente un gain de temps et par conséquent une diminution du prix de revient.

Par ailleurs, l'obtention de cette empreinte par déformation plastique crée un fibrage du métal qui renforce la résistance mécanique de la vis. On peut ainsi réduire la longueur de la partie filetée 20 par rapport à une vis classique, comme illustré sur le figure, ce qui se traduit par une économie de matière et par une diminution de poids substantielles.

## Revendications

1. Vis à empreinte d'extrémité, caractérisée en ce que ladite empreinte (30) est de forme multilobée avec un nombre impair de lobes.

2. Vis selon la revendication 1, caractérisée en ce que l'empreinte multilobée (30) comporte sept lobes.

## FIG.1

## FIG. 2

## FIG.3

## FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 874 258  (SEMOLA et al.)<br>* figures 1,7,8 * | 1 | F 16 B   23/00 |
| A | | 2 | |
| | --- | | |
| X | EP-A-0 087 721  (RAPPOLD)<br>* revendications 1,2; figures 1,3 * | 1 | |
| A | | 2 | |
| | --- | | |
| X | FR-A-1 585 454  (PODOLSKY)<br>* résumé; figures 14,15 * | 1 | |
| A | | 2 | DOMAINES TECHNIQUES RECHERCHES (Int. Cl.4) |
| | --- | | |
| A | FR-A-1 339 685  (BOULEY)<br>* figures * | 1 | F 16 B   23/00 |
| | --- | | |
| A | GB-A-2 048 738  (TEXTRON)<br>* revendication 1; figures 1,3 * | 1 | |
| | ----- | | |

Le présent rapport de recherche a été établi pour toutes les revendications

| Lieu de la recherche<br>BERLIN | Date d'achèvement de la recherche<br>27-04-1987 | Examinateur<br>SCHAEFFLER C.A.A. |
|---|---|---|